# EUROPEAN PATENT APPLICATION

(11) **EP 2 874 135 A2**
(43) Date of publication of application: **20.05.2015**
(21) Application number: 14191010.9
(22) Date of filing: 30.10.2014
(51) Int. Cl.: G09C 1/00, H04L 9/08, H04L 9/32

(54) **Integrated Circuit Provisioning Using Physical Unclonable Function**

(30) Priority: 18.11.2013 US 201314082829
(71) Applicant: ViXS Systems Inc., Toronto, ON M2K 1E3 (CA)
(72) Inventor: Ducharme, Paul D., Richmond Hill, Ontario L4B 4R8 (CA); Zheng, Heyun, Toronto, Ontario M1T 3P4 (CA)
(74) Representative: Benson, Christopher

(57) **Abstract**

A one-time programmable (OTP) memory of an integrated circuit is provisioned based on identifier data generated by a physical unclonable function (PUF) of the integrated circuit. The identifier data is used as part of cryptographic operations to secure provisioning of security information at an OTP memory of at the integrated circuit. Because of the physical characteristics of the PUF and its incorporation in the integrated circuit, the identifier information is unique to the integrated circuit. Accordingly, the provisioned security information is also unique to the integrated circuit. The OTP memory can therefore be securely provisioned at later stages of the integrated circuit manufacturing and configuration process, such as after the integrated circuit has been packaged or attached to a printed circuit board.

## Description

### BACKGROUND

### Field of the Disclosure

The present disclosure relates generally to integrated circuits and more particularly to security for integrated circuits.

### Description of the Related Art

Some integrated circuit designs protect secured operations from unauthorized access by implementing an authentication procedure, whereby the integrated circuit must be authenticated before the secured operations can be executed. For example, some integrated circuit designs require the integrated circuit to be authenticated before boot code or other software is permitted to be executed. The authentication procedure typically requires the integrated circuit to present security data, generated by the vendor of the integrated circuit, in response to a request to execute the secure operation. The security data can be a password that allows the secure operation's software code to be accessed, a decryption key to decrypt the secure operation's software code, and the like. To further enhance security, the security data is sometimes stored at a one-time programmable (OTP) memory of the integrated circuit. This storing of the security data is referred to as "provisioning" the OTP memory (or, alternatively, provisioning the integrated circuit). Prior to provisioning the OTP memory, the corresponding integrated circuit is vulnerable to being stolen, cloned or otherwise copied in such a way that the integrated circuit (or the clones or copies thereof) can provide unauthorized access to the secure operation. Accordingly, the OTP is typically provisioned at an early stage of the integrated circuit's manufacture and configuration, such as when the integrated circuit is a portion of a semiconductor wafer. However, the programming of the OTP memory at such an early stage is typically expensive and time-consuming.

### BRIEF DESCRIPTION OF THE DRAWINGS

The present disclosure may be better understood, and its numerous features and advantages made apparent to those skilled in the art by referencing the accompanying drawings. The use of the same reference symbols in different drawings indicates similar or identical items.
FIG. 1 is a block diagram of an integrated circuit in accordance with at least one embodiment.
FIG. 2 is a block diagram of the provisioning module of FIG. 1 in accordance with at least one embodiment.
FIG. 3 is a diagram illustrating a method of enrolling the integrated circuit of FIG. 1 for OTP memory provisioning in accordance with at least one embodiment.
FIG. 4 is a diagram illustrating a method of provisioning the OTP memory of FIG. 1 in accordance with at least one embodiment.
FIG. 5 is a diagram illustrating a method of activating the integrated circuit of FIG. 1 so that it can access a secure operation in accordance with at least one embodiment.

### DETAILED DESCRIPTION OF EMBODIMENT(S)

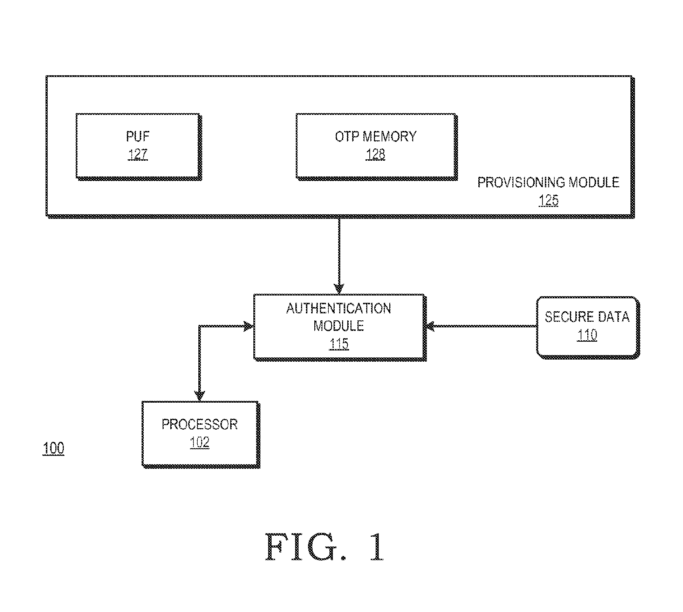

FIGs. 1-5 illustrate techniques for provisioning an OTP memory of an integrated circuit based on identifier data generated by a physical unclonable function (PUF) of the integrated circuit. The identifier data is used as part of cryptographic operations to secure provisioning of security information at an OTP memory of at the integrated circuit. Because of the physical characteristics of the PUF and its incorporation in the integrated circuit, the identifier information is unique to the integrated circuit. Accordingly, the provisioned security information is also unique to the integrated circuit. The OTP memory therefore can be provisioned at later stages of the integrated circuit manufacturing process, such as after the integrated circuit has been packaged or placed on a printed circuit board, thereby reducing cost and complexity of the OTP memory provisioning.

FIG. 1 illustrates a block diagram of an integrated circuit 100 in accordance with at least one embodiment. The integrated circuit 100 is a set of electronic circuits on a semiconductor material, whereby the electronic circuits are designed to collectively implement the functions of a processor, controller, video encoder/decoder (codec), audio codec, and the like. The integrated circuit 100 can be designed for use in any of a variety of electronic devices, such as a personal computer, set-top box, media player, computer enabled smart phone, and the like.

For purposes of description, it is assumed that the integrated circuit 100 passes through at least three entities before it is ready for distribution to an end user for its intended use. First, a designer/manufacturer designs the integrated circuit 100 and manufactures it (or has it manufactured by another entity) by forming the integrated circuit 100 on a semiconductor wafer, singulating a die containing the integrated circuit 100, and placing the die containing the integrated circuit 100 in an integrated circuit package. Next, the manufactured integrated circuit 100 is provided to a "chip vendor", who configures the integrated circuit for use in a particular type of electronic device. The chip vendor may also incorporate the integrated circuit 100 in a larger electronic circuit, such as by mounting the integrated circuit package implementing the integrated circuit 100 on a printed circuit board or otherwise connecting the integrated circuit package to other electronic components. The chip vendor provides the configured integrated circuit 100 to a conditional access system (CAS) vendor, who makes final configurations on the integrated circuit 100 and places it in an electronic device for sale to the end user.

To illustrate, in one embodiment the integrated circuit 100 is a video decoder that is designed and manufactured by a video decoder design firm. The design firm provides the integrated circuit 100 to a video decoder system vendor (the chip vendor), which incorporates the integrated circuit 100 into a video decoder system and sells the system to a video device manufacturer (the CAS vendor), who incorporates the video decoder system into a video playback device, such as a set-top box or video disc player, and distributes the video playback device to an end user. It will be appreciated that, in some scenarios, a single entity may perform more than one, or all of, the above functions. For example, in one scenario the chip vendor also performs the functions of the CAS vendor and incorporates the integrated circuit 100 into an electronic device for sale to an end user.

It will further be appreciated that copies of the integrated circuit 100 can be provided to different entities at each of the above-referenced stages, for incorporation into different systems and devices for end users. That is, copies of the integrated circuit 100 can be provided to different chip vendors for incorporation into different systems, and each of the different systems can be provided to different CAS vendors for incorporation into different electronic devices for an end user. Thus, using the above example, copies of the video decoder can be provided to different chip vendors for incorporation into different video decoder systems, and the different video decoder systems provided to one CAS vendor for incorporation into a set-top box and to another CAS vendor for incorporation into a video disc player.

Each of the CAS vendors configures its copies of the integrated circuit 100 for use in its corresponding electronic device. In some embodiments, the configuration involves configuring the integrated circuit 100 to perform secure operations, whereby the integrated circuit 100 can only perform the secure operations if it has been authenticated. In at least one embodiment, a secure operation is secured by cryptographically encoding software that, when executed, performs the secure operation. For security purposes, it is desirable to cryptographically encode or otherwise protect the secure operation with security information that is unique to each copy of the integrated circuit 100. For example, the software that performs the secure operation can be encoded based on a key that is unique to the particular copy of the integrated circuit 100. This ensures that, if one copy of the integrated circuit 100 is "hacked" by determining the key for that copy, other copies of the integrated circuit 100 remain secure.

To provide security for secure operations, the integrated circuit 100 includes a provisioning module 125 having a physical unclonable function (PUF) 127 and a one-time programmable (OTP) memory 128. The OTP memory 128 is a storage structure that includes a number of cells, with each cell storing a corresponding single bit of data. The OTP memory 128 is configured so that, once one of its cells is set to an asserted state (e.g. a digital value of "1"), that cell is fixed in that state. For example, the OTP memory 128 can be a set of fuses that, when an individual fuse is tripped (e.g. via laser cutting of the fuse material), the fuse remains in the tripped state. The OTP memory 128 therefore cannot be easily modified and so is especially suitable to store security information for secured operations, as described further herein.

The PUF 127 is a physical structure that reacts in an unpredictable but repeatable way to a stimulus to generate a set of data, referred to herein as "PUF data". The characteristics of the PUF 127 are such that the generated PUF data are unique to the integrated circuit 100. The PUF 127 can be any of a variety of PUF devices, such as a static random access memory (SRAM) PUF, an optical PUF, a delay PUF, a butterfly PUF, a bistable PUF, a magnetic PUF, and the like. As described further herein, during a provisioning process the chip vendor, CAS vendor, another entity, or a combination thereof (referred to for purposes of description as the "provisioning entity"), generate security information (e.g. cryptographic keys or code words) used to protect secure operations of the integrated circuit 100. The provisioning entity uses the PUF data 127 to encrypt the security information, and stores the encrypted security information at the OTP memory 128. During operation, the encrypted security information can be decrypted using the PUF data, and the decrypted security information used to access a secure operation.

To illustrate via an example, the integrated circuit 100 includes a processor 102, an authentication module 115, and provisioning module 125. The processor 102 includes one or more processor cores to execute sets of instructions in order to carry out tasks for an electronic device. In the course of its operation, the processor 102 attempts to access secure data 110. For purposes of description, the secure data is assumed to be a software routine that, when executed by the processor performs a secure operation. For example, in one embodiment the integrated circuit 100 is a video decoder embedded in a video playback device, such as set-top box or video disk player, and the secure data 110 is a software routine used to decode and play encoded video.

The integrated circuit 100 further includes an authentication module 115 configured to obtain authentication information for the secure data 110 based on received security information. For example, in at least one embodiment, the authentication module 115 is a hardware block, key ladder, or similar module that decrypts the secure data 110 based upon one or more keys generated by the authentication module 115 based on the received security information.

In operation, processor 102 attempts to access secure data 110 by issuing a request to the authentication module 115. In response, the authentication module 115 requests the security information from the provisioning module 125. The provisioning module 125 obtains the previously-provisioned encrypted security information from the OTP memory 128 and obtains the PUF data from the PUF 127. Using the PUF data, the provisioning module 125 decrypts the encrypted security data and provides the decrypted security data to the authentication module 115. The authentication module 115 uses the decrypted security data as a key to decrypt the secure data 110, and provide the resulting information to the processor 102. Assuming that the security information provided by the provisioning module 125 was properly provisioned, the information by the authentication module 115 to the processor 102 will be in a format that can be interpreted by one or more routines executing at the processor 102. The processor 102 is thus given access to the secure data 110.

Because the provisioning of the security data, and the decryption of the secure data 110 using the security data, is based upon the PUF data, it is unique for each copy of the integrated circuit 100. It is therefore difficult for a hacker to access the secure data 110 using another integrated circuit, even one that is a copy of the integrated circuit 100. To illustrate, assume that a hacker probes the integrated circuit 100 to copy the secure data 110 and the security information provisioned at the OTP memory 128. The copied information is stored at a different copy of the integrated circuit 100. When the processor of the integrated circuit copy attempts to access the secure data 110, the corresponding provisioning module 125 will attempt to decrypt the security information using its own PUF data. However, because that PUF data of the copy will differ from the PUF data of the integrated circuit 100, the security information will not be properly decrypted. Accordingly, the authentication module of the integrated circuit copy will not be able to properly decrypt the secure data 110, preventing access by the hacker. Further, the physical characteristics of the PUF 127 are such that it is very difficult to access the PUF data via probing or other intrusive action, because such action typically alters the PUF data as it is generated by the PUF 127. The PUF 127 thus provides a secure basis for individually provisioning security information to the OTP memories of each integrated circuit produced by a designer/manufacturer. Further, the OTP memories of the integrated circuits can be provisioned at any of a variety of stages of production, including when the integrated circuit 100 is part of a semiconductor wafer, after the integrated circuit 100 has been incorporated in an integrated circuit package, after the integrated circuit 100 has been mounted on a printed circuit board, or other stage, thereby reducing the cost and complexity of provisioning the OTP memory 128.

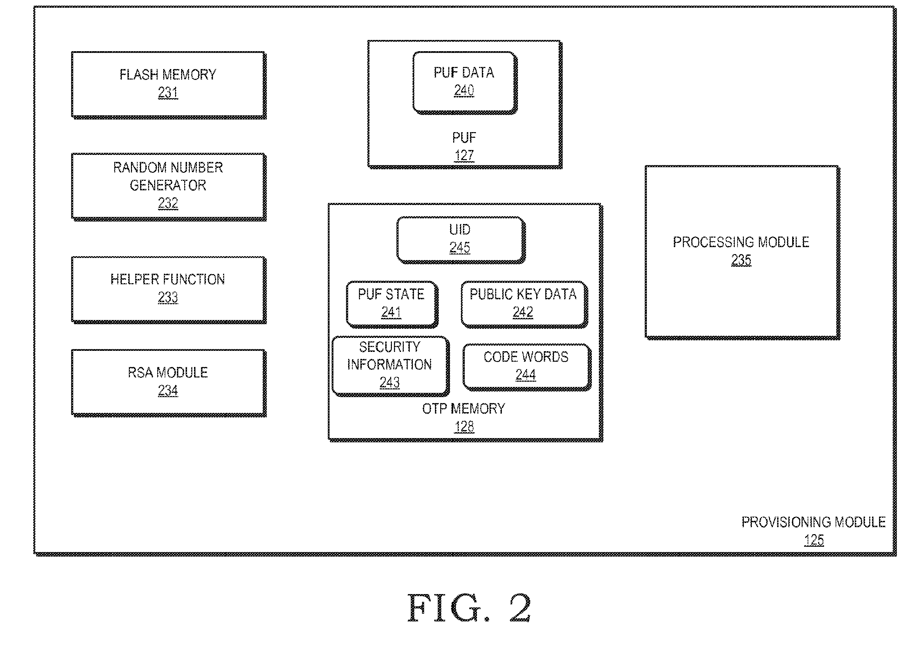

FIG. 2 illustrates the provisioning module 125 in greater detail in accordance with at least one embodiment. In the illustrated example, the provisioning module 125 includes a flash memory 231, a random number generator 232, a helper function 233, an RSA module 234, the PUF 127, the OTP memory 128, and a processing module 235. The PUF 127 is configured to repeatably generate PUF data 240 that is unique to the integrated circuit 100.

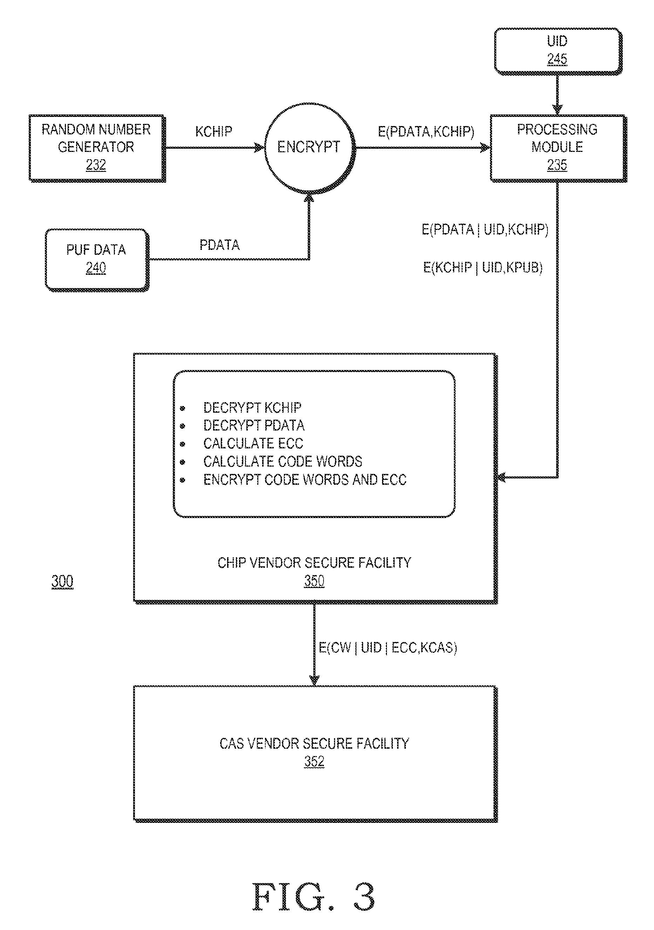

The OTP memory 128 is a memory configured to store a variety of information, including a unique ID (UID) 245, a PUF state 241, public key data 242, security information 243, and code words 244. The UID 245 is a value that identifies the integrated circuit 100 such that it is differentiated from other integrated circuits in the same lot or other grouping of integrated circuits. Thus, for example, the UID 245 can be a serial number or other identifier. The PUF state 241 is a variable containing state information whose state indicates whether the PUF data 240 is accessible and, if so, how the PUF data 240 is to be accessed, as described further below with respect to FIGs. 3-5. The public key data 242 and code words 244 is data that is used for encryption and decryption as described further below with respect to FIGs. 3-5. The security information 243 is used by the authentication module 115 to provide access to secure operations, as described above with respect to FIG. 1.

The processing module is a processor, FPGA, or other module configured to work with the other modules of the provisioning module 125 to effectuate provisioning of the integrated circuit 100 according to a three stage process. The three stages are: an enrollment stage, wherein the integrated circuit 100 is prepared to receive the security information 243, a provisioning stage, wherein the security information 243 is generated, encrypted, and stored in encrypted form at the OTP memory 128, and an activation stage, wherein the security information 243 is decrypted and provided to the authentication module 115 to authenticate secure data. Examples of these stages, and their corresponding processes, are illustrated at FIGs. 3-5, respectively.

FIG. 3 is a diagram illustrating an enrollment process 300 at the integrated circuit 100 in accordance with at least one embodiment. The random number generator 232 generates a random number designated "KCHIP", which the provisioning module 125 uses as an encryption key to encrypt the PUF data 240. The encryption can be done at the processing module 235, at the RSA module 234, at another specialized hardware processing module (not shown), or a combination thereof. The encryption of the PUF data 240 results is concatenated to the UID and encrypted to generate the value designated "E(PDATA | UID,KCHIP)."

The processing module 235 concatenates the UID value with the PDATA value which is encrypted (using a symmetric encryption algorithm, for example AES) to produce a value designated "E(PDATA | UID, KCHIP)". In addition, the processing module 235 retrieves a public key, designated "KPUB", from the public key data 242 and uses it to encrypt the KCHIP value concatenated with the UID 245 (using an asymmetric algorithm, for example RSA), resulting in a value designated "E(KCHIP | UID, KPUB)". The KPUB value is a public key associated with a particular chip vendor's private key that receives copies of the integrated circuit 100 for enrollment. The integrated circuit 100 supplies the values E(KCHIP | UID, KPUB) and E(PDATA | UID, KCHIP) to the chip vendor's secure facility 350. The secure facility 350 is a location having security features (e.g. technician authorization procedures, network isolation of devices used in the enrollment process, and the like) to isolate the integrated circuit 100, and any copies thereof supplied to the chip vendor, from unauthorized access, allowing the enrollment process to take place in a secure environment.

At the secure facility, the chip vendor uses one or more personal computers, servers, and the like, to perform enrollment of the integrated circuit 100 and any copies thereof. In the illustrated example of FIG. 3, the chip vendor decrypts the KCHIP value from the E(KCHIP | UID, KPUB) using a private key associated with the public key, accordingly to a conventional public-private key authentication procedure. The chip vendor then uses the KCHIP value as a key to decrypt the PUF data 240 (designated "PDATA") from the value E(PDATA | UID, KCHIP). Because the KCHIP value is a random number generated by the integrated circuit 100 at the time of the enrollment process, it cannot be used to enroll other copies of the integrated circuit 100, including any stolen copies. The KCHIP value thereby provides additional security for the enrollment process.

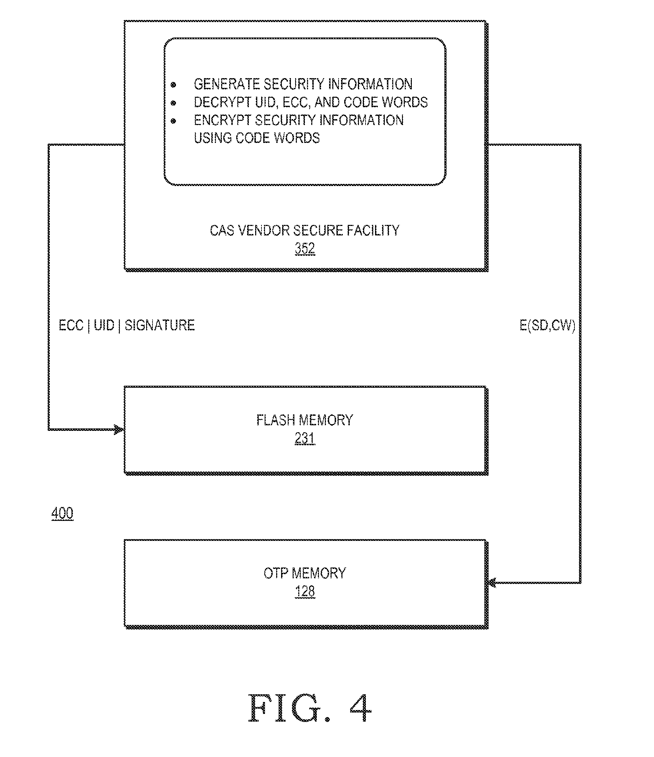

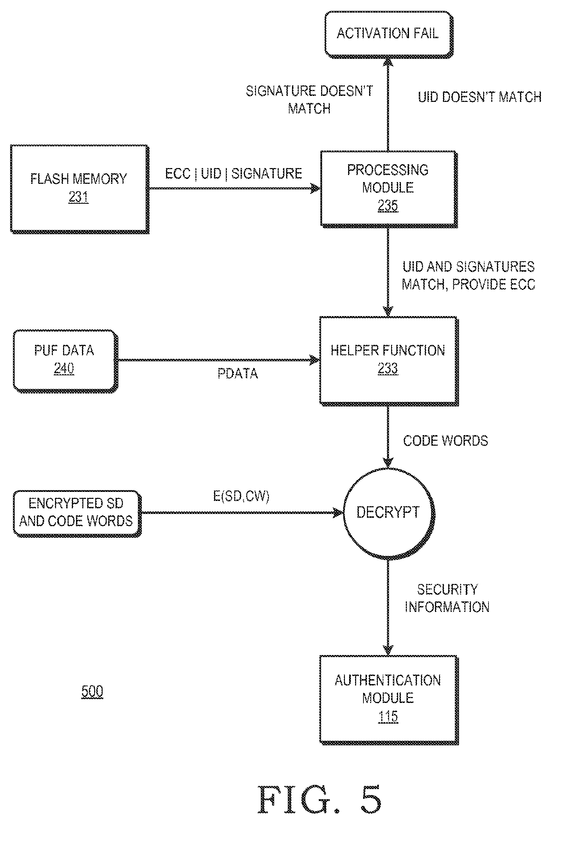

The chip vendor uses the PDATA value to calculate error correction code (ECC) values for the PUF data 240. As described further with respect to FIGs. 4 and 5, these ECC values are used during OTP provisioning and activation to ensure that the PUF data 240 is a repeatable value. In particular, when the PUF 127 generates the PUF data 240, non-repeatable errors can occur in individual bits of the PUF data 240. These errors can be corrected using the ECC values calculated at the secure facility 350, so that the corrected PUF data 240 is a repeatable value.

The chip vendor uses the ECC values to correct any errors in the PDATA value, and uses the resulting corrected value to calculate the code words 244. As described further with respect to FIG. 4, these code words 244 can be used during the OTP provisioning process to encrypt the security information 243. In at least one embodiment, the chip vendor can generate multiple sets of code words, with each set being unique to a corresponding CAS vendor. This allows the chip vendor to supply different code word sets to different CAS vendors that are to receive copies of the integrated circuit 100, providing further security for the enrollment and OTP provisioning processes.

The chip vendor concatenates the set of code words for a given CAS vendor together with the UID 245 and the ECC values, using an encryption key designated "KCAS", resulting in a value designated "E(CW | UID | ECC, KCAS)". The chip vendor supplies this value to a secure facility 352 for the given CAS vendor, where the OTP memory 128 of the integrated circuit 100 is provisioned.

FIG. 4 is a diagram illustrating an OTP provisioning process 400 for the integrated circuit 100 in accordance with at least one embodiment. For OTP provisioning, the CAS vendor generates the security information 243 that is to be used to authenticate the secure data 110 (FIG. 1). The CAS vendor decrypts the value E(CW I UID |ECC, KCAS) supplied by the chip vendor using a private key value corresponding to the public key value KCAS, thereby obtaining the UID 245 along with the ECC values for the PUF data 240 and the code words 244 generated during the enrollment process described with respect to FIG. 3. The CAS vendor concatenates the ECC values, the UID 245, and a signature value to generate a value designated "ECC | UID | SIGNATURE". The signature value can be used, during the activation process described with respect to FIG. 5, to authenticate the ECC values, providing additional security for the OTP provisioning and activation processes. The CAS vendor stores the ECC | UID | SIGNATURE value at the flash memory 231 for use during the activation process described with respect to FIG. 5.

The CAS vendor encrypts the security data using the previously decrypted code words 244, and then uses the code words 244 as one or more key values to encrypt the security information 243 for the integrated circuit 100, thereby generating a value designated "E(SD, CW)". The CAS vendor programs this value into the OTP memory 128, thereby provisioning the OTP memory 128 with the security information 243 and the code words 244 in encrypted form. The integrated circuit 100 has thus been provisioned for activation.

FIG. 5 illustrates a method of activating the integrated circuit 100, so that the processor 102 (FIG. 1) can access the secure data 110 (FIG. 1), in accordance with at least one embodiment. During an activation process 500, in response to a request from the authentication module 115 that is triggered based on a request from the processor 102 to access the secure data 110, the processing module 235 retrieves the ECC | UID | SIGNATURE value from the flash memory 231. The processing module 235 extracts the signature and UID values and compares them to expected values (e.g. the UID 245). If either of the extracted values do not match their expected values, the processing module 235 determines that the integrated circuit 100 has not been properly provisioned during the OTP provisioning process 400 (FIG. 4), and therefore indicates an activation failure to the authentication module 115. In response, the authentication module 115 does not decrypt or otherwise authenticate the secure data 110, so that the processor 102 cannot access the corresponding secure operation.

If both of the extracted signature and UID values match their expected values, the processing module 235 extracts the ECC values from the ECC | UID | SIGNATURE value and provides them to the helper function 233. In at least one embodiment, the helper function 233 is a set of one or more hardware modules that is configured to perform error correction operations on the PUF data 240, and to perform operations on the resulting corrected data that are similar to the operations performed by the chip vendor during the enrollment process (FIG. 4) to generate the code words 244. That is, the helper function 233 corrects any errors in the PUF data 240 using the ECC values extracted by the processing module 235 and then generates code words that, if the OTP memory 128 was properly provisioned, should match the code words 244.

The processing module 235 uses the code words generated by the helper function 233 to decrypt the value E(SD,CW) stored at the OTP memory 128, thereby generating security information, and provides the security information to the authentication module 115. If the OTP memory 128 was properly provisioned, the generated security information is the correct security information to authenticate the secure data 110. Accordingly, if the OTP memory 128 was properly provisioned, the authentication module 115 authenticates the secure data 110, thereby providing the processor 102 access to the corresponding secure operation.

If the OTP memory 128 was not properly provisioned (e.g. because the security information 243, code words 244, or other value was generated or modified by a hacker), the generated security information will not be such that the authentication module 115 can correctly decrypt or otherwise authenticate the secure data 110. Accordingly, if the OTP memory 128 was not properly provisioned, the authentication module does not authenticate the secure data 110, thereby denying the processor 102 access to the corresponding secure operation.

In at least one embodiment, the PUF state 241 is used to provide further security during the enrollment, OTP provisioning, and activation processes. In at least one embodiment, the PUF state 241 is a two bit binary value. When the PUF state is set to 00, the PUF 127 will not provide the PUF data 240, so that enrollment, OTP provisioning, and activation cannot take place. When the PUF state is set to "01" or "10", the PUF 127 will provide the PUF data 240 for enrollment and OTP provisioning, but the helper function will not function, so that activation cannot take place, thereby preventing access to the secure data 110. When the PUF state is set to "11" then the circuit is put into an activation state wherein enrollment is no longer permitted. Note that the PUF state is implemented in an OTP memory, wherein each cell may only be programmed from a 0 to a 1 state, and may not be cleared from the 1 state to the 0 state. This thus imposes the constraint that the PUF states must proceed in a specific order. This is important from a security perspective in that it prevents a hacker with a chip which has been activated from performing enrollment.

The PUF state 241 can be used as follows: prior to the integrated circuit designer/manufacturer providing the integrated circuit 100 to the chip vendor's secure facility 350, it does not program either bit of the PUF state 241, so that the PUF state is maintained at the value 00. This ensures that, if the integrated circuit 100 is stolen from the designer/manufacturer, it cannot be correctly enrolled, provisioned, or activated, unless the thief knows the particular cells of the OTP memory 128 that store the PUF state 241. These particular cells can be varied for different lots or other sets of integrated circuits, so that it is difficult for a thief to emulate any of the enrollment, OTP provisioning, or activation processes.

When the designer/manufacturer provides the integrated circuit for enrollment, it can set the PUF state 241 to one of the values 01 or 10. In at least one embodiment, the PUF state is set based upon which entity is performing the enrollment or OTP provisioning processes, which in turn indicates which of the values at the public key data 242 are used to encrypt the KCHIP value during the enrollment process 300. To illustrate, a PUF state 241 of 01 can indicate that enrollment is to take place at the chip vendor. Accordingly, during the enrollment process 300, the KCHIP value is encrypted using a public key value corresponding to the chip vendor. In contrast, a PUF state 241 of 10 can indicate that enrollment is to take place at the CAS vendor. Accordingly, during the enrollment process 300, the KCHIP value is encrypted using a public key value corresponding to the CAS vendor. The PUF state 241 thus provides flexibility as to which particular entity is to perform the enrollment process.

At the end of the OTP provisioning process 400, the PUF state 241 is set to 11, so that the integrated circuit 100 can be activated. This ensures that, if the integrated circuit 100 is stolen or otherwise accessed during the enrollment process 300 or the OTP provisioning process 400, the activation process 500 cannot take place, thereby preventing access to the secure data 110.

As indicated previously, the PUF 127 can be any of a variety of PUF structures. In at least one embodiment, the PUF 127 is an optical PUF having a region of transparent material that has been doped with light scattering particles. The PUF data 240 is generated by applying a laser or other light on the transparent material, thereby generating a random, repeatable, and unique speckle pattern that is translated into corresponding digital information. In at least one embodiment, the PUF 127 is a coating PUF, wherein a layer of the integrated circuit 100 is formed to a have a set of wires laid out in a comb shape. The comb structure is filled with an opaque material and randomly doped with dielectric particles. This creates a random, repeatable, unique variation in the capacitance between the wires in the comb structure, and this capacitance is used to generate the PUF data 240.

In at least one embodiment, the PUF 127 is a delay PUF including a set of circuits that produce signal transitions at random, repeatable, and unique delays that are used by one or more arbiters to generated the PUF data 240. In at least one embodiment the PUF 127 is an SRAM PUF that includes an SRAM memory structure. After a reset, the bit cells of the SRAM memory structure are filled with random, repeatable, and unique data that is used to generate the PUF data 240. In at least one embodiment, the PUF 127 is a butterfly PUF, wherein pairs of latches or flip-flops are cross-coupled to collectively store, after a reset, a set of random, repeatable, and unique data that is used to generate the PUF data 240. In at least one embodiment, the PUF 127 is a bistable PUF, wherein one or more bistable rings of inverters are used to generate, after a reset, a set of random, repeatable, and unique data that is used to generate the PUF data 240. In at least one embodiment, the PUF 127 is a magnetic PUF, wherein a strip of magnetic material is formed at the integrated circuit 100. Because of variations in the formation process, the strip generates a magnetic field that is random, repeatable, and unique to the integrated circuit 100. The magnetic field is used to generate the PUF data 240.

Note that not all of the activities or elements described above in the general description are required, that a portion of a specific activity or device may not be required, and that one or more further activities may be performed, or elements included, in addition to those described. Still further, the order in which activities are listed are not necessarily the order in which they are performed. Also, the concepts have been described with reference to specific embodiments. However, one of ordinary skill in the art appreciates that various modifications and changes can be made without departing from the scope of the present disclosure as set forth in the claims below. Accordingly, the specification and figures are to be regarded in an illustrative rather than a restrictive sense, and all such modifications are intended to be included within the scope of the present disclosure.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all the claims. Moreover, the particular embodiments disclosed above are illustrative only, as the disclosed subject matter may be modified and practiced in different but equivalent manners apparent to those skilled in the art having the benefit of the teachings herein. No limitations are intended to the details of construction or design herein shown, other than as described in the claims below. It is therefore evident that the particular embodiments disclosed above may be altered or modified and all such variations are considered within the scope of the disclosed subject matter. Accordingly, the protection sought herein is as set forth in the claims below.

## Claims

1. A method comprising:
communicating identifier data from a physical unclonable function (PUF) at an integrated circuit;
receiving, at the integrated circuit, security information generated based on the identifier data; and
storing the security information at a one-time programmable (OTP) memory of the integrated circuit.

2. The method of claim 1, further comprising:
authenticating code to be executed at the integrated circuit based on the security information stored at the OTP memory.

3. The method of claim 1 or 2, wherein receiving the security information comprises one or more of:
receiving the security information at the integrated circuit while the integrated circuit is part of a semiconductor wafer;
receiving the security information at the integrated circuit after the integrated circuit has been incorporated into an integrated circuit package; and or
receiving the security information at the integrated circuit after the integrated circuit has been attached to a printed circuit board.

4. The method of claim 1, 2 or 3 further comprising:
storing, at the integrated circuit, error correction code (ECC) data based on the identifier data; and
wherein the security information comprises code words generated based on the ECC data and the identifier data.

5. The method of any preceding claim, wherein communicating the identifier data comprises:
generating a random value at the integrated circuit;
encrypting the random value and the identifier data at the integrated circuit based on a public key to generate an encrypted value; and
communicating the encrypted value to generate the security information.

6. The method of claim 5, further comprising:
selecting the public key at the integrated circuit from one of a plurality of stored public keys based on state information associated with the PUF and stored at the OTP memory.

7. The method of claim 6, further comprising:
communicating the identifier data from the PUF in response to the state information being in a first state; and
programming the state information from the first state to a second state in response to receiving the security information at the integrated circuit;
optionally wherein the identifier data cannot be communicated from the PUF when the state information is in the second state.

8. The method of any preceding claim, further comprising:
in response to a reset at the integrated circuit:
generating, at the integrated circuit, code words based on the identifier data;
decrypting the security information stored at the OTP memory based on the code words; and
authenticating operations at the integrated circuit based on the decrypted security information.

9. A method, comprising:
generating, at a physical unclonable function (PUF) of an integrated circuit, identifier data for the integrated circuit;
generating code words based on the identifier data;
decrypting security information stored at a one-time programmable (OTP) memory based on the code words; and
authenticating operations at the integrated circuit based on the decrypted security information.

10. The method of claim 9, further comprising:
providing the identifier data from the PUF for generation of the security information; and
storing the generated security information at the OTP memory.

11. The method of claim 9 or 10, further comprising:
in response to providing the identifier data, receiving error correction code (ECC) data based on the identifier data;
storing the ECC data at a memory of the integrated circuit; and
wherein generating the code words comprises generating the code words based on the identifier data and the ECC data.

12. An integrated circuit, comprising:
a physical unclonable function (PUF) structure to generate identifier data;
a one-time programmable (OTP) memory to store security information encrypted based on the identifier data; and
an authentication module to decrypt the security information based on the identifier data and to authenticate a secure operation of the integrated circuit based on the decrypted security information.

13. The integrated circuit of claim 12, further comprising:
a provisioning module to provide the identifier data from the PUF structure for generation of the security information, and to store the generated security information at the OTP memory.

14. The integrated circuit of claim 12 or 13, wherein the provisioning module:
is to provide the identifier data when the integrated circuit is part of a semiconductor wafer;
is to provide the identifier data after the integrated circuit has been incorporated into an integrated circuit package; and/or
is to provide the identifier data after the integrated circuit has been attached to a printed circuit board.

15. The integrated circuit of claim 12, 13 or 14, wherein the PUF structure is a random access memory (RAM) structure.
